(19) Europäisches Patentamt
European Patent Office
Office européen des brevets

(11) **EP 4 782 902 A1**

(12) **EUROPEAN PATENT APPLICATION**
published in accordance with Art. 153(4) EPC

(43) Date of publication:
**29.07.2026 Bulletin 2026/31**

(21) Application number: **24868143.9**

(22) Date of filing: **06.09.2024**

(51) International Patent Classification (IPC):
***G02B 13/14*** (2006.01)  ***G02B 13/02*** (2006.01)
***G02B 13/18*** (2006.01)

(52) Cooperative Patent Classification (CPC):
**G02B 13/02; G02B 13/14; G02B 13/18**

(86) International application number:
**PCT/JP2024/031989**

(87) International publication number:
**WO 2025/063065 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.09.2023 JP 2023153115**

(71) Applicant: **Nippon Electric Glass Co., Ltd.
Otsu-shi, Shiga 520-8639 (JP)**

(72) Inventors:
• **MATSUSHITA, Yoshimasa
Otsu-shi, Shiga 520-8639 (JP)**
• **HORI, Nobuo
Higashimatsuyama-shi, Saitama 355-0003 (JP)**

(74) Representative: **Vidon Brevets & Stratégie
16B, rue de Jouanet
35700 Rennes (FR)**

(54) **INFRARED IMAGING LENS**

(57)     Provided is a telephoto lens having excellent resolution. An infrared imaging lens (1) includes a first lens (L1), a second lens (L2), and a third lens (L3), each of which is made of a chalcogenide glass having a refractive index of 2.5 to 4.0 measured at a wavelength of 10 $\mu$m, the infrared imaging lens having a total system focal length which is not less than two times larger than a diameter of an image circle of the infrared imaging lens, each of the first lens and the third lens being a meniscus lens having a positive power, and the second lens being a meniscus lens having a negative power.

FIG. 1

EP 4 782 902 A1

## Description

Technical Field

The present invention relates to an infrared imaging lens.

Background Art

Infrared cameras for capturing an image of a subject with use of infrared radiation in mid- and far-infrared regions, in particular, a 10 pm-band wavelength region which is suitable for biodetection, are applied to surveillance cameras, security cameras, in-vehicle night vision systems, and the like. These infrared cameras can be applied in various fields, such as surveillance over intruders, surveillance over illegal activities such as illegal fishing, detection of a forest-fire origin, traffic monitoring, and obstacle monitoring, and thus are expected to increase in demand.

As an infrared imaging lens applied to an infrared camera for applications such as long-distance monitoring at night, a so-called telephoto lens, which has a relatively long focal length with respect to an image circle diameter on an image plane, is required. As such an infrared imaging lens, the applicants of the present invention have proposed a telephoto lens that has a small f-number to provide high brightness and that has excellent resolution suitable for a small image sensor having a pixel pitch substantially equivalent to a wavelength.

Citation List

[Patent Literature]

[Patent Literature 1]
International Patent Application Publication No. WO 2023/008148

Summary of Invention

Technical Problem

With expansion of applications of the infrared cameras, infrared imaging lenses having various characteristics have come to be required. For example, in the conventional technology disclosed in Patent Literature 1, it is desired to provide an infrared imaging lens that has further reduced distortion (image distortion aberration) while maintaining brightness and resolution. An aspect of the present invention has been made in view of the above-described problems, and has an object to provide an infrared imaging lens that is a telephoto lens having excellent resolution suitable for an image sensor having a pixel pitch substantially equivalent to a wavelength, having reduced distortion, and being available for commercial applications.

Solution to Problem

In order to attain the above object, an aspect of the present invention is an infrared imaging lens that is used in an infrared region including at least a wavelength in a range of 7 $\mu$m to 14 $\mu$m, the infrared imaging lens including: a first lens, a second lens, and a third lens that are disposed in this order in a direction from an object to an image plane, each of the first lens, the second lens, and the third lens being made of a chalcogenide glass having a refractive index of 2.5 to 4.0 measured at a wavelength of 10 $\mu$m, the infrared imaging lens having a total system focal length fL which is not less than two times larger than a diameter of an image circle of the infrared imaging lens, each of the first lens and the third lens being a meniscus lens having a positive power, and the second lens being a meniscus lens having a negative power.

In order to attain the above object, another aspect of the present invention is an infrared imaging lens that is used in an infrared region including at least a wavelength in a range of 7 $\mu$m to 14 $\mu$m, the infrared imaging lens including: a first lens, a second lens, and a third lens that are disposed in this order in a direction from an object to an image plane, each of the first lens, the second lens, and the third lens being made of a chalcogenide glass having a refractive index of 2.5 to 4.0 measured at a wavelength of 10 $\mu$m, each of the first lens and the third lens being a meniscus lens having a positive power, the second lens being a meniscus lens having a negative power, and the infrared imaging lens having a half angle of view of not more than 14°.

Advantageous Effects of Invention

In accordance with the aspect of the present invention, it is possible to provide an infrared imaging lens that is a telephoto lens having excellent resolution suitable for an image sensor having a pixel pitch substantially equivalent to a wavelength, having reduced distortion, and being available for commercial applications.

Brief Description of Drawings

Fig. 1 is a cross-sectional view illustrating a configuration of a main part of an infrared imaging lens in accordance with an embodiment of the present invention.

Fig. 2 shows aberration diagrams illustrating spherical aberration, astigmatism, and distortion of an infrared imaging lens in accordance with Numerical Example 1 of the present invention.

Fig. 3 shows aberration diagrams illustrating comatic aberration of the infrared imaging lens in accordance with Numerical Example 1 of the present invention.

Fig. 4 is a graph illustrating an image height dependency of a relative illuminance of the infrared imaging lens in accordance with Numerical Example 1 of the present invention.

Fig. 5 is a graph illustrating a spatial frequency dependency of an MTF in a wavelength range of 7 $\mu$m to 14 $\mu$m for the infrared imaging lens in accordance with Numerical Example 1 of the present invention.

Fig. 6 is a graph illustrating a dependency of the MTF on focal shift for the infrared imaging lens in accordance with Numerical Example 1 of the present invention.

Description of Embodiments

Embodiments

Outline of infrared imaging lens

An infrared imaging lens 1 in accordance with an embodiment is a lens system that can be used in a wavelength region for mid- and far-infrared regions and that forms an image of a subject on an image plane S on which an image sensor or the like is disposed. The infrared imaging lens 1 in accordance with the present embodiment is intended for a telephoto lens having a total system focal length fL which is not less than two times larger than a diameter φs of an image circle of the infrared imaging lens 1. Alternatively, the infrared imaging lens 1 in accordance with the present embodiment is intended for a telephoto lens having a half angle of view ω (maximum half angle of view) of not more than 14°.

In the present application, the term "image circle" is intended to mean a range of an effective diameter of an optical system of the image plane S of the imaging lens. That is, the image circle refers to a circular region on the image plane S in which an image height Y extends up to a maximum image height. A diameter φs of the image circle represents a diameter of a circular region such as those described above, similarly to that expressed by the term "lens diameter" or the like. That is, the diameter φs of the image circle is equal to two times larger than the maximum image height.

As is known in the field of imaging lenses, (i) the half angle of view ω of the imaging lens and (ii) the total system focal length fL and the diameter φs of the image circle of the imaging lens have the following relation:

$$\omega = \arctan[\varphi s / (2fL)].$$

In this expression, "arctan" represents an arctangent function. The condition that the total system focal length fL is not less than two times larger than the diameter φs of the image circle (fL/φs ≥ 2) is equivalent to a half angle of view ω being not more than 14°.

(i) An imaging lens having a total system focal length fL which is not less than two times larger than a diameter φs of an image circle or (ii) an imaging lens having a half angle of view ω which is not more than 14° is an imaging lens that is generally referred to as a "telephoto lens", which has a focal length of not less than 85 mm in the 35 mm format. Note that it is assumed that conversion into the 35 mm format has been carried out for image sensors having a diagonal length substantially equal to a diameter φs of an image circle and effectively utilizes the image circle. Thus, the present embodiment is directed to an infrared imaging lens that makes it possible to provide an imaging device capable of magnifying and observing a distant object.

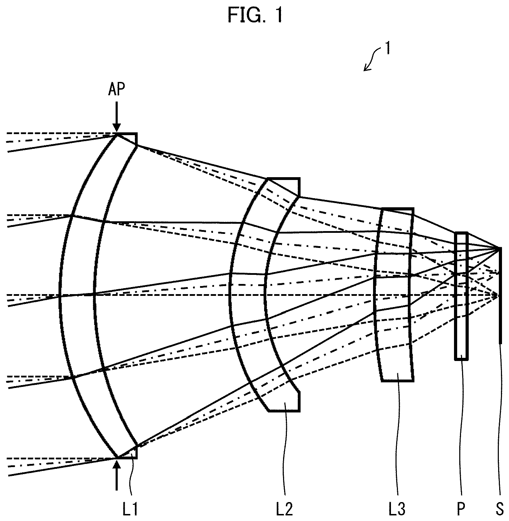

Fig. 1 is a cross-sectional view illustrating a configuration of a main part of the infrared imaging lens 1, shown along an optical axis. The infrared imaging lens 1 includes a first lens L1, a second lens L2, and a third lens L3 which are disposed in this order in a direction from an object to an image plane S. In focusing, all the first to third lenses L1 to L3 move in the direction of the optical axis.

The first lens L1, the second lens L2, and the third lens L3 are each made of a chalcogenide glass having a refractive index N10 in a range of 2.5 to 4.0, measured at a wavelength of 10 $\mu$m. The reference sign "N10" represents, particularly, a refractive index measured at a wavelength of 10 $\mu$m. Each of the first lens L1, the second lens L2, and the third lens L3 may be made of the same glass material, namely, a chalcogenide glass. Particularly, it is preferable that each of the first lens L1, the second lens L2, and the third lens L3 be made of a chalcogenide glass having a refractive index in a range of 3.0 to 4.0 at a wavelength of 10 $\mu$m, and more preferably in a range of 3.0 to 3.7 at a wavelength of 10 $\mu$m.

The first lens L1 has a positive refractive power and has a meniscus shape. The second lens L2 has a negative refractive power and has a meniscus shape. The third lens L3 has a positive refractive power and has a meniscus shape. By employing the lenses configured and arranged in this manner, it is possible to achieve a telephoto lens having a reduced Petzval sum and excellent resolution as well as reduced distortion. Particularly, it is preferable that each of the first lens L1, the second lens L2, and the third lens L3 have a meniscus shape convex toward the object side.

As shown in Fig. 1, a parallel flat plate P is disposed between the third lens L3 and the image plane S. The parallel flat plate P is an optical window which is hermetically sealed so as to be loaded closer to the image plane S, and is made of silicon, hypoxic silicon, or germanium. A material and a thickness of the parallel flat plate P can be determined depending on the type of image sensor employed.

As indicated by the reference sign "AP" in Fig. 1, an effective diameter of a surface (first surface) of the first lens L1 which surface is closer to the object corresponds to an aperture of the infrared imaging lens 1. Anti-reflection (AR) coatings are applied to surfaces of the first lens L1, the second lens L2, the third lens L3, and the parallel flat plate P. Such anti-reflection coatings in the mid- to far-infrared regions can employ any appropriate known technique.

Glass material of each lens

The following will describe the chalcogenide glass constituting each of the lenses of the infrared imaging lens 1. The chalcogenide glass used for the infrared imaging lens 1 is a chalcogenide glass having a refractive index in a range of 2.5 to 4.0 measured at a wavelength of 10 $\mu$m. It is preferable to set the refractive index of the chalcogenide glass so as to fall within a range of 2.5 to 4.0, in order to achieve an infrared imaging lens 1 (i) having an f-number (f-value) of approximately 1.0 to provide high brightness and (ii) having excellent resolution suitable for an image sensor having a pixel pitch equivalent to a wavelength in the mid- and far-infrared regions, e.g., in a range from 7 $\mu$m to 14 $\mu$m.

Such a chalcogenide glass, which has a high refractive index in the far-infrared region, has been developed by the applicants of the present invention (refer to International Publication, No. WO 2020/105719 A1). More specifically, the refractive index N 10 of the glass material at a wavelength of 10 $\mu$m is provided in a range of 2.74 to 3.92. With the first lens L1, the second lens L2, and the third lens L3 each made of a chalcogenide glass having a low refractive index, it is difficult to configure a telephoto lens in a compact manner. Therefore, it is particularly preferable that the chalcogenide glass have a refractive index in a range of 3.0 to 4.0, measured at a wavelength of 10 $\mu$m.

Further, it is preferable that the chalcogenide glass have an Abbe number (v10) of not less than 100, not less than 120, not less than 150, not less than 180, particularly preferably not less than 220. The definition of the Abbe number (v10) will be described later. The lower the Abbe number, the larger the chromatic aberration tends to be. There is no particular limitation on an upper limit of the Abbe number. However, the upper limit of the Abbe number of the above-described chalcogenide glass is practically not more than 350.

The glass material exhibits extremely low light absorption over a wide wavelength range in the far-infrared region, i.e., a wavelength range at least including 7 $\mu$m to 14 $\mu$m. Particularly, the glass material has a characteristic of exhibiting low light absorption also in the far-infrared region, which is a wavelength range of 10 $\mu$m to 26 $\mu$m. For the chalcogenide glass, an "infrared absorption edge wavelength" and an "internal transmittance" can be used as indices indicating a degree of excellence in optical transparency in the far-infrared region.

The "infrared absorption edge wavelength" refers to an absorption edge wavelength in a region of wavelengths of not less than 8 $\mu$m, and is defined as a wavelength at which an optical transmittance is 20% at a thickness of 2 mm of the material. The "internal transmittance" refers to a transmittance inside the material, and does not include a reflection loss at a surface of the material. The chalcogenide glass used as a glass material constituting each lens has an infrared absorption edge wavelength of not less than 18 $\mu$m.

Thus, the above-described chalcogenide glass allows transmission of even infrared light having a wavelength exceeding 10 $\mu$m, and exhibits good transmittance at least in a wavelength range of 7 $\mu$m to 14 $\mu$m. Further, at a thickness of 2 mm, an internal transmittance of the above-described chalcogenide glass is not less than 90%, measured at a wavelength of 10 $\mu$m. Thus, with the infrared imaging lens 1 in accordance with the present embodiment, it is possible to achieve an imaging lens exhibiting, over a wide wavelength range of at least 7 $\mu$m to 14 $\mu$m, little light absorption caused by a glass material of the lens.

Furthermore, by using the above-described chalcogenide glass, it becomes easy to mass-produce lenses by press-molding. Moreover, by the press-molding, it also becomes possible to mass-produce aspherical lenses. The term "aspherical surface" as used herein includes a diffractive surface. Note that the glass material preferably has a glass transition temperature of not more than 200°C, which is low, so as to make it easier to carry out the press-molding.

The infrared imaging lens 1 in accordance with the present embodiment is configured to include an aspherical lens as at least one of the lenses, thereby suppressing aberrations. An infrared imaging lens 1 that cannot employ an aspherical lens would require an increased number of lenses in order to suppress aberrations, which results in an increase in weight and size. Such an imaging lens becomes costly and is not suitable for commercial applications. Note that the term "aspherical surface" as used herein includes a diffractive surface.

Furthermore, with the above-described chalcogenide glass, press-molding can be carried out to obtain a lens having a surface with a particularly complex shape, such as a diffractive surface. Thus, with an infrared imaging lens 1 made of the above-described chalcogenide glass so that a surface (second surface) of a first lens L1 which surface is closer to an image plane serves as a diffractive surface, it is possible to satisfactorily suppress aberration over a wide wavelength range of 7 $\mu$m to 14 $\mu$m.

In particular, a chalcogenide glass having a refractive index of 3.0 to 3.7 at a wavelength of 10 $\mu$m is excellent in mass productivity, and has been put into industrial production by the applicants of the present invention. Furthermore, such a chalcogenide glass, which has a refractive index of 3.0 to 3.7, is also excellent in processability in forming a lens. Thus, it is particularly preferable that the chalcogenide glass constituting each of the first lens L1, the second lens L2, and the third lens L3 be a chalcogenide glass having a refractive index of 3.0 to 3.7 at a wavelength of 10 $\mu$m.

Crystalline materials such as silicon (Si), germanium (Ge), zinc sulfide (ZnS), and zinc selenide (ZnSe), each of which is used as a material that allows transmission of light in mid- and far-infrared regions, are not glasses. Unlike glasses, such crystalline materials cannot be subjected to press-molding that utilizes softening by heating. Thus, it is difficult to use such crystalline materials to mass-produce aspherical lenses having a complex shape. Therefore, it is difficult to use such crystalline materials to yield low-cost aspherical lenses for commercial applications.

Specifically, it is preferable that the above-described chalcogenide glass be a chalcogenide glass containing 20 mol% to 90 mol% of tellurium (Te), when expressed in terms of mol%. More specifically, it is preferable that the above-described chalcogenide glass be a chalcogenide glass containing 20% to 90% of Te and 0% to 50% of Ge+Ga, when expressed in terms of mol%.

Unless otherwise specified, "%" as used herein means "mol%". The expression "A1 + A2 + ..." as used herein means a combined amount of the corresponding components. Note that this description refers to a content of at least one component selected from the group consisting of the corresponding components, and a configuration of not including a certain one included in the group is also possible. For example, in a case of a configuration in which "p% to q% of A1+A2+A3+A4+A5 is preferable", a configuration of "p% to q% of A1+A2+A3+A4 (not including A5)" is also possible.

The following description will discuss a preferable composition of the above-described chalcogenide glass. Te is a component of which a glass skeleton is formed and which is likely to increase an internal transmittance in a wavelength band of not less than 10 $\mu$m. Te is also a component likely to increase a refractive index. A Te content is preferably 20% to 90%, 30% to 88%, 40% to 84%, 50% to 82%, particularly preferably 60% to 80%.

A too low Te content is less likely to cause vitrification. A too high Te content is more likely to cause deposition of Te-based crystals. Note that other chalcogen elements, Se and S, are more likely to lower an internal transmittance in a wavelength band of not less than 10 $\mu$m, in comparison to Te. Therefore, a Se content and a S content are each preferably 0% to 10%, 0% to 5%, 0% to 3%, particularly preferably 0% to 1%.

The above-described chalcogenide glass preferably contains Ge and/or Ga in addition to Te. That is, Ge+Ga (a combined amount of Ge and Ga) is preferably 0% to 50%, 1% to 40%, 3% to 35%, 5% to 30%, particularly preferably 10% to 30%. Containing these components makes it possible to extend a vitrification range and allow glass to be more thermally stable (allow vitrification to be more stable). A preferable range of each of Ge component and Ga component is as described below.

Ge is a component which extends a vitrification range and allows glass to be more thermally stable. A Ge content is preferably 0% to 50%, 1% to 40%, 3% to 35%, 5% to 30%, 8% to 25%, particularly preferably 10% to 20%. A too high Ge content is more likely to cause deposition of Ge-based crystals and tends to increase raw material cost.

Ga is a component which extends a vitrification range and allows glass to be more thermally stable. A Ga content is preferably 0% to 50%, 1% to 30%, 2% to 20%, 3% to 15%, particularly preferably 4% to 10%. A too high Ga content is more likely to cause deposition of Ga-based crystals and tends to increase raw material cost.

For allowing vitrification to be more stable, it is preferable that a combined amount of Ge, Ga, and Te contents be large. Specifically, Ge+Ga+Te is preferably not less than 50%, not less than 60%, not less than 70%, particularly preferably not less than 80%. However, in order to introduce other component(s), an upper limit of Ge+Ga+Te may be set so as to be not more than 98%, not more than 96%, not more than 95%, particularly preferably not more than 90%.

The above-described chalcogenide glass can contain, in addition to the above components, various components described below.

Ag is a component which allows glass to be more thermally stable and to have a higher refractive index. An Ag content is preferably 0% to 50%, more than 0% to 50%, 1% to 45%, 2% to 40%, 3% to 35%, 4% to 30%, 5% to 25%, particularly preferably 5% to 20%. A too high Ag content is less likely to cause vitrification.

Si is a component which allows glass to be more thermally stable. A Si content is preferably 0% to 50%, more than 0% to 50%, 1% to 45%, 2% to 40%, 3% to 35%, 4% to 30%, 5% to 25%, particularly preferably 5% to 20%. A too high Si content is more likely to cause infrared absorption caused by Si, thereby making infrared transmission difficult. Note that Si is a component likely to reduce an Abbe number, and therefore the Si content is preferably not more than 5%, not more than 1%, not more than 0.5%, particularly preferably less than 0.1%, for the purpose of increasing the Abbe number.

Each of Al, Ti, Cu, In, Sn, Bi, Cr, Sb, Zn, and Mn is a component which allows glass to be more thermally stable, without decreasing the infrared transmittance properties. An Al+Ti+Cu+In+Sn+Bi+Cr+Sb+Zn+Mn content (a combined amount of Al, Ti, Cu, In, Sn, Bi, Cr, Sb, Zn, and Mn) is preferably 0% to 40%, 2% to 35%, 4% to 30%, particularly preferably 5% to 25%. A too high Al+Ti+Cu+In+Sn+Bi+Cr+Sb+Zn+Mn content is less likely to cause vitrification.

A content of each of Al, Ti, Cu, In, Sn, Bi, Cr, Sb, Zn, and Mn components is preferably 0% to 40%, 1% to 40%, 1% to 30%, 1% to 25%, particularly preferably 1% to 20%. Among the above components, Al, Cu, and/or Sn are/is preferably used because these components are particularly highly effective in making glass more thermally stable. However, each of Al and Sn is a component likely to reduce an Abbe number, and thus each of an Al content and an Sn content is preferably not more than 5%, not more than 1%, 0.5%, particularly preferably less than 0.1%, for the purpose of increasing the Abbe number.

Each of F, Cl, Br, and I is a component which allows glass to be more thermally stable. An F+Cl+Br+I content (a combined amount of F, Cl, Br, and I) is preferably 0% to 40%, 2% to 35%, 4% to 30%, particularly preferably 5% to 25%. A too high F+Cl+Br+I content is less likely to cause vitrification and is more likely to cause a decrease in weatherability. Each of contents of F, Cl, Br, and I components is preferably 0% to 40%, 1% to 40%, 1% to 30%, 1% to 25%, particularly preferably 1% to 20%. Among these, I is preferable, since I can be an element material and is particularly highly effective in making glass more thermally stable.

In order to reduce a burden on the environment, it is particularly preferable that Se or As be substantially not contained. In the present invention, the expression "substantially not contained" means that a content of a subject is less than 0.1 mol%. It is preferable that Cd, Tl, or Pb be substantially not contained. This makes it possible to minimize environmental impacts.

Details of configuration of each lens

The infrared imaging lens 1 in accordance with the present embodiment can be configured to have details of each part as described below.

In order to achieve an imaging device that allows a distant object to be enlarged and observed, the infrared imaging lens 1 in accordance with the present embodiment is configured to have the total system focal length fL which is not less than two times larger than the diameter $\varphi s$ of the image circle. This may be also defined as the infrared imaging lens 1 having the half angle of view $\omega$ of not more than 14°.

In particular, the infrared imaging lens 1 in accordance with the present embodiment is preferably configured to have a total system focal length fL which is three to six times larger than the diameter $\varphi s$ of the image circle. This may also be defined as the infrared imaging lens 1 having a half angle of view $\omega$ of not more than 5° to 10°. The infrared imaging lens 1 configured as above may be expressed as a telephoto lens having a focal length in a range from 130 mm to 260 mm in the 35 mm format. It is preferable that an absolute value of the total system focal length fL be 20 mm to 50 mm.

The infrared imaging lens 1 in accordance with the present embodiment is an infrared imaging lens that can be used in an infrared region including wavelengths ranging from 7 $\mu$m to 14 $\mu$m. By employing the above-described chalcogenide glass as a glass material of each of the lenses, it is possible to achieve excellent characteristics over a wide wavelength range of 7 $\mu$m to 14 $\mu$m.

According to the present embodiment, it is possible to achieve, as a telephoto lens configured as above, a bright imaging lens having an f-number in a range of 0.9 to 1.1. Further, it is possible to achieve a telephoto lens exhibiting, over a wide wavelength range of at least 7 $\mu$m to 14 $\mu$m, little light absorption caused by a glass material of the lens. This, combined with a low f-number of approximately 1, makes it possible to achieve a bright imaging lens.

It is particularly preferable that absolute values of powers of the respective lenses be, in descending order, the third lens L3, the first lens L1, and the second lens L2. The infrared imaging lens 1 is configured such that the third lens L3, located closest to the image plane, has a largest power, and all the three lenses having the respective powers set as such have a meniscus shape with their convex surfaces facing the image plane S. This makes it possible to reduce astigmatism.

It is preferable that the infrared imaging lens 1 be configured such that the focal length f1 of the first lens and the total system focal length fL satisfy the following relational expression:

$$1.5 \leq f1/fL \leq 2.5.$$

That is, it is preferable that the infrared imaging lens 1 be configured such that (i) the first lens L1 does not contribute much to the total system focal length fL and (ii) the third lens L3 is caused to contribute to the total system focal length fL. With the infrared imaging lens 1 configured in this manner, it is possible to obtain high resolution suitable for an image sensor having a pixel pitch substantially equivalent to a wavelength, while maintaining good aberration properties.

It is preferable that the infrared imaging lens 1 be configured such that (i) a total track length (TTL), which is a distance measured along the optical axis from the surface (first surface) of the first lens L1 which surface is closer to the object to the image plane S, and (ii) the total system focal length fL satisfy the following relational expression:

$$1.2 \leq TTL/fL \leq 2.0.$$

That is, it is preferable that the total track length TTL be somewhat greater than the total system focal length fL. With the infrared imaging lens 1 configured in this manner, it is possible to obtain high resolution suitable for an image sensor having a pixel pitch substantially equivalent to a wavelength, while maintaining good aberration properties.

In the infrared imaging lens 1, it is preferable that an effective diameter of the surface (first surface) of the first lens L1 which surface is closer to the object be regarded as an aperture. Such a configuration makes it possible to reduce vignetting of peripheral light beams and increase peripheral light quantity. Particularly, combined with the achievement of a relative illuminance of not less than 94% even at a maximum image height and the reduced distortion, this configuration can provide an excellent imaging lens that can yield a natural image. Further, it is possible to reduce an outer diameter and a volume of the infrared imaging lens 1, in comparison with a configuration in which an aperture diaphragm is inserted between the lenses.

It is preferable that the infrared imaging lens 1 be configured such that a back focal length BFL and the total system focal length fL satisfy the following relational expression:

$$0.2 \leq BFL/fL.$$

This configuration makes it possible to provide a telephoto lens which has aberration properties and resolution, while securing the back focal length BFL.

It is preferable that at least one of the first lens L1 and the second lens L2 be an aspherical lens. This makes it possible to reduce spherical aberration and astigmatism in the infrared imaging lens 1. It is particularly preferable that both the first lens L1 and the second lens L2 be aspherical lenses. A surface (third surface) of the second lens L2 which surface is closer to the object may be aspherical and a surface (fourth surface) of the second lens L2 which surface is closer to the image plane may be spherical. The third lens L3 may be a spherical lens.

Furthermore, it is preferable that either one of the surfaces of the first lens L1 be a diffractive surface. This makes it possible to generate negative dispersion and reduce axial chromatic aberration and lateral chromatic aberration. It is particularly preferable that the surface (second surface) of the first lens L1 which surface is closer to the image plane be a diffractive surface. The configuration in which the concave surface is provided as the diffractive surface makes it easier to form the diffractive surface through press-molding.

The infrared imaging lens 1 is configured such that, at an image height of 2.5 mm on the image plane S, a modulation transfer function (MTF) in a wavelength range of 7 μm to 14 μm at a spatial frequency of 41.7 cycles/mm is not less than 0.3 (30%). Here, the value of the MTF is a simple average value of an MTF in a tangential direction and an MTF in a sagittal direction. The following will describe the reason for focusing on the spatial frequency of 41.7 cycles/mm and the image height of 2.5 mm.

As a result of progress in size reduction of image sensors in mid- and far-infrared regions, pixel pitches thereof have reached a narrow pitch limit which is substantially equivalent to a wavelength. Such an image sensor, which has a reduced size, can be produced at a low cost, as compared with sensors having a large surface area. In addition, an imaging lens applied to such an image sensor can also be made to have a diameter reduced in accordance with an area of the image sensor, and accordingly the cost of the imaging lens can be reduced.

Thus, an infrared camera employing the image sensor and the imaging lens configured as above can reduce its cost and thus becomes suitable for commercial applications, and thus can be applied to various fields. As an image sensor for a 10 μm-band wavelength region, an image sensor having a pixel pitch of 12 μm has been commercially available. The spatial frequency of 41.7 cycles/mm corresponds to a Nyquist frequency of the image sensor having a pixel pitch of 12 μm.

An MTF of not less than 0.3 at an image height of 2.5 mm indicates that sufficient resolution with an MTF of not less than 0.3 can be obtained in an entire region of an image sensor that is disposed on the image plane S and that has 320 × 256 pixels having a pixel pitch of 12 μm. That is, the infrared imaging lens 1 is a telephoto lens that covers a wavelength region of approximately 7 μm to 14 μm and that is sufficiently suitable for a far-infrared camera to which a QVGA (320 × 240 pixels) class image sensor having a reduced size is applied.

In addition, the infrared imaging lens 1 is configured to have, at an image height of 4.1 mm on the image plane S, an MTF of not less than 0.45 (45%) in a wavelength range of 7 μm to 14 μm at a spatial frequency of 29.4 cycles/mm. The spatial frequency of 29.4 cycles/mm corresponds to a Nyquist frequency of an image sensor having a pixel pitch of 17 μm.

An MTF of not less than 0.45 at a spatial frequency of 29.4 cycles/mm at an image height of 4.1 mm indicates that good resolution with an MTF of not less than 0.45 is obtained in an entire region of an image sensor that is disposed on the image plane S and that has 384 × 288 pixels having a pixel pitch of 17 μm. That is, the infrared imaging lens 1 is a telephoto lens that covers a wavelength region of approximately 7 μm to 14 μm and that has resolution sufficiently suitable for an infrared camera to which an image sensor having a pixel pitch of approximately 12 μm to 17 μm is applied.

Numerical Example 1

The following description will discuss a numerical example of the infrared imaging lens 1. A cross-sectional view of an infrared imaging lens in accordance with Numerical Example 1 is as illustrated in Fig. 1. In Numerical Example 1, "r" represents a radius of curvature, "d" represents a lens thickness or a distance between surfaces on an optical axis, and "ED" represents an effective diameter (diameter). A unit of length is (mm). The symbol "*" (asterisk) following a numeral of a surface number indicates that the corresponding surface is an aspherical surface, and "DOE" indicates that the corresponding surface is a diffractive surface. The following indicates basic lens data, aspherical surface data, diffractive surface data, and various data.

[Table 1]

| Numerical Example 1 | | | Basic Lens Data | | |
|---|---|---|---|---|---|
| Surface No. | r (mm) | d (mm) | N10 | ν10 | ED (mm) |
| Object plane | | ∞ | | | |
| 1 | 22.21 | 3.05 | 3.46501 | 253 | 28.000 |
| 2*(DOE) | 25.00 | 11.74 | | | 26.200 |
| 3* | 15.88 | 3.10 | 3.46501 | 253 | 20.022 |
| 4 | 13.44 | 9.53 | | | 16.897 |
| 5 | 37.33 | 3.15 | 3.46501 | 253 | 15.043 |
| 6 | 76.44 | 4.00 #1 | | | 14.053 |
| 7 | ∞ | 1.00 | 3.41776 | 3129 | 10.906 |
| 8 | ∞ | 2.93 | | | 10.674 |
| Image plane | | | | | 8.227 |
| | | | #1 Variable depe nding on focusing | | |

The refractive index and the Abbe number ν10 are as defined below:
N8: refractive index at wavelength of 8 μm
N 10: refractive index at wavelength of 10 μm
N12: refractive index at wavelength of 12 μm

$$\nu 10 = (N10 - 1)/(N8 - N12)$$

[Table 2]

| Numerical Example 1 | | Aspherical Surface Data |
|---|---|---|
| Coefficient | Second surface | Third surface |
| K | 0 | -0.1646685 |
| A2 | 0 | 0 |
| A4 | 0 | -1.9017473E-06 |
| A6 | 0 | -5.1689543E-08 |
| A8 | 0 | 2.6757323E-10 |
| A10 | 0 | -2.2505280E-12 |

An aspherical shape is defined as follows:

$$Z = \frac{h^2/r}{1 + \sqrt{1 - (1 + \kappa)(h/r)^2}} + \sum A_n h^n$$

h: height from optical axis
r: vertex radius of curvature
$\kappa$: conic constant
An: n-th order aspheric coefficient (n is an even number)
Z: distance at h from point on aspherical surface to tangential plane of aspherical vertex

[Table 3]

| Numerical Example 1 Diffractive Surface Data | |
|---|---|
| Coefficient | Second surface |
| P1 | -1.2369460E-01 |
| P2 | -3.9480993E-05 |

A diffractive surface is defined as below:

$$\Phi = P_1 \times h^2 + P_2 \times h^4$$

$$Z_{DOE} = \frac{1}{(N-1)} \times MOD(Z_{dif}, -\lambda)$$

$$Z_{dif} = \frac{\lambda}{2\pi} \Phi$$

$\Phi$: phase difference function
$P_1, P_2$: phase coefficient
$Z_{dif}$: optical path function
$Z_{DOE}$: sag amount of diffractive surface
$\lambda$: designed center wavelength (assumed to be 10 $\mu$m)

[Table 4]

| Numerical Example 1 Various Data | |
|---|---|
| Location of aperture: | Corresponding to first surface. Aperture diameter $\Phi$: 28.00 mm |
| F number: | 1.0 |
| Maximum half angle of view: | 8.4° |
| Maxium image height: | 4.1 mm |
| Total system focal length: | 28.0 mm |
| Back focus: | 7.93 mm (d6+d7+d8) |
| Total track length: | 38.5 mm |

A first lens L1, a second lens L2, and a third lens L3 are each made of a chalcogenide glass having (i) a refractive index N 10 of 3.465 measured at a wavelength of 10 $\mu$m and (ii) an Abbe number of 253. A surface (second surface) of the first lens L1 which surface is closer to an image plane is a diffractive surface made of a spherical surface on which kinoform-shaped sags are formed. Each of the sags has a depth in a range from 0 to a value equivalent to a designed center wavelength $\lambda$.

A parallel flat plate P is made of silicon (Si). The parallel flat plate P can be an optical window attached to an image sensor disposed at an image plane S. Even if the position of the parallel flat plate P deviates somewhat from the value shown in Table 1, this does not affect optical characteristics of the infrared imaging lens 1. That is, a distance between a sixth surface and a seventh surface (d6 = 4.00 mm in Table 1) and a distance between an eighth surface and the image plane S (d8 = 2.93 mm in Table 1) may be changed, provided that a total value thereof remains the same. A back focal length (BFL = 7.93 mm) is an actual length.

A maximum image height on the image plane S is 4.1 mm, and therefore a diameter $\varphi s$ of an image circle is 8.2 mm. Therefore, the infrared imaging lens 1 can be applied to a QVGA-class image sensor, such as the one which has a diagonal length of 8.16 mm and which has $384 \times 288$ pixels having a pixel pitch of 17 $\mu$m. Further, the infrared imaging lens 1 can cover pixel regions of respective QVGA-class image sensors including QVGA ($320 \times 240$ pixels) having a pixel pitch of 17 $\mu$m and QVGA+ ($345 \times 240$ pixels) having a pixel pitch of 17 $\mu$m.

Needless to say, the infrared imaging lens 1 can cover a pixel region of a QVGA-class image sensor which has $320 \times 256$ pixels having a pixel pitch of 12 $\mu$m. Note that the configuration of $384 \times 288$ pixels, the configuration of $320 \times 256$ pixels, or the like makes it possible to secure the number of effective pixels of the QVGA ($320 \times 240$ pixels) even if the optical axis of the lens is not perfectly concentric with the image sensor.

In the infrared imaging lens 1, a ratio of the total system focal length fL to a diameter $\varphi s$ of the image circle is as follows:

$$fL/\varphi s = 3.41.$$

That is, the infrared imaging lens 1 is a telephoto lens. In addition, the infrared imaging lens 1 has a half angle of view $\omega$ of 8.4°. This is within a range of not more than 14°, within which the infrared imaging lens 1 can be regarded as a telephoto lens. The infrared imaging lens 1 is a telephoto lens having such a narrow angle of view and is an imaging lens having an f-number of 1.0 to provide extremely high brightness.

The infrared imaging lens 1 has (i) a total track length TTL (entire length of the optics) of 38.5 mm as measured from the surface (first surface) of the first lens L1 which surface is closer to the object to the image plane S and (ii) a maximum effective diameter of 28.0 mm on an optical path, and is thus compact. Such a compact configuration is achieved by employing the first lens L1 having a positive power, the second lens L2 having a negative power, and the third lens L3 having a positive power, each of the first lens L1, the second lens L2, and the third lens L3 being made as a meniscus lens having a meniscus shape which is convex to the image plane side.

Furthermore, the infrared imaging lens 1 is constituted by three lenses, and thus can be made lightweight. Combined with the configuration in which each lens can be produced by press-molding, this configuration makes it possible to produce the infrared imaging lens 1 at low cost suitable for commercial applications. Furthermore, an infrared camera employing the infrared imaging lens 1 can be made compact, which makes it possible to provide an infrared camera that can be easily installed in various places.

A focal length f1 of the first lens L1 is 45.42 mm. Thus, a ratio of the focal length f1 of the first lens L1 to the total system focal length fL of the infrared imaging lens 1 is as follows:

$$f1/fL = 1.62.$$

A focal length f2 of the second lens L2 is -369.0 mm. A focal length f3 of the third lens L3 is 27.99 mm. Thus, the infrared imaging lens 1 is configured such that the third lens L3 has a power having a greatest absolute value and the first lens L1 has a power having a second greatest absolute value.

A ratio of the total track length TTL (entire length of the optics) of the infrared imaging lens 1 to the total system focal length fL of the infrared imaging lens 1 is as follows:

$$TTL/fL = 1.38.$$

The back focal length BFL is 7.93 mm (actual length) and thus secures a sufficient length. A ratio of the total track length TTL (entire length of the optics) to the back focal length BFL is as follows:

$$TTL/BFL = 4.85.$$

A ratio of the back focal length BFL to the total system focal length fL is as follows:

$$BFL/fL = 0.28.$$

This satisfies "$0.2 \leq BFL/fL$".

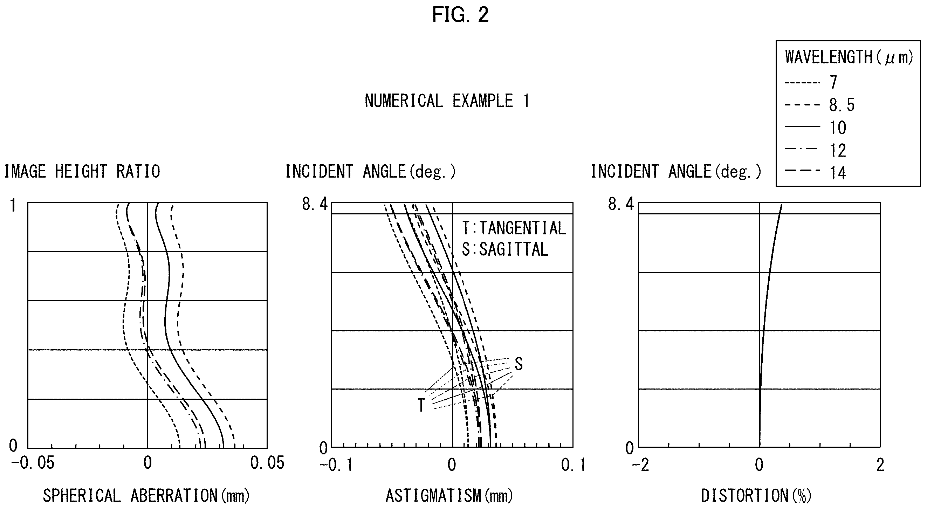

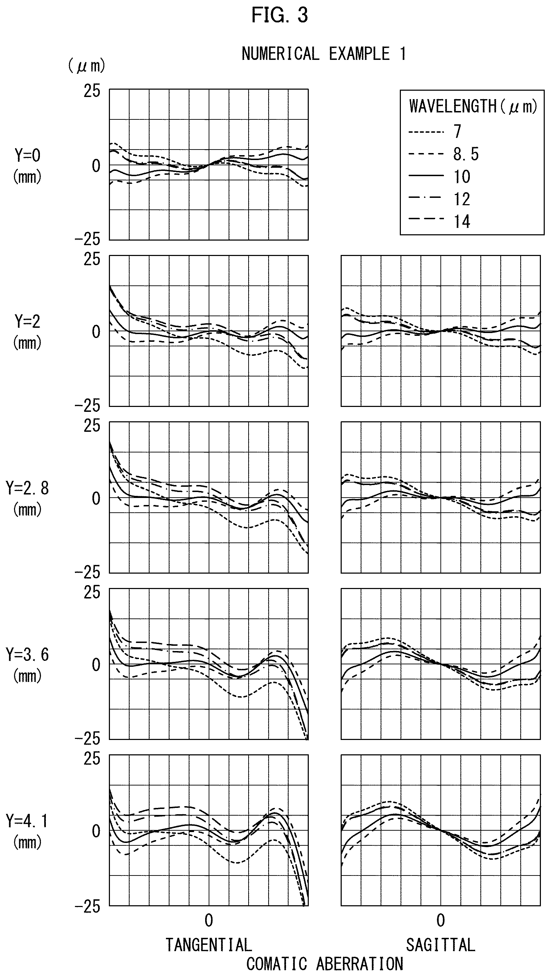

Various performance capabilities of the infrared imaging lens 1 in accordance with Numerical Example 1 are illustrated in Figs. 2 to 6. Figs. 2 and 3 show aberration diagrams of the infrared imaging lens 1. Fig. 2 shows spherical aberration, astigmatism, and distortion. Each diagram indicates a graph for a respective wavelength in a range of 7 μm to 14 μm. Fig. 3 shows aberration diagrams each illustrating comatic aberration measured (i) at an image height Y in a range from 0 mm to a maximum image height and (ii) for a tangential (meridional) direction or a sagittal (radial) direction.

As shown in Figs. 2 and 3, the infrared imaging lens 1 in accordance with Numerical Example 1 has various types of aberration satisfactorily corrected over a wide wavelength region of 7 μm to 14 μm. Particularly, with the infrared imaging lens 1, distortion is not more than 0.37%, which is extremely small, over an entire image circle at each wavelength in a range of 7 μm to 14 μm, that is, excellent characteristics are achieved.

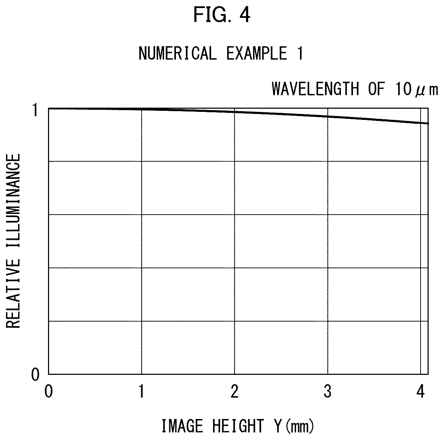

Fig. 4 is a graph showing a relative illuminance relative to an image height Y in the infrared imaging lens 1 in accordance with Numerical Example 1. The "relative illuminance" refers to an illuminance ratio of a certain region to an on-optical axis region of the image plane S (i.e., a central region of the image plane). As shown in Fig. 4, the relative illuminance is 0.94 even at a maximum image height of 4.1 mm. That is, a substantially uniform light-quantity distribution is obtained in the image circle.

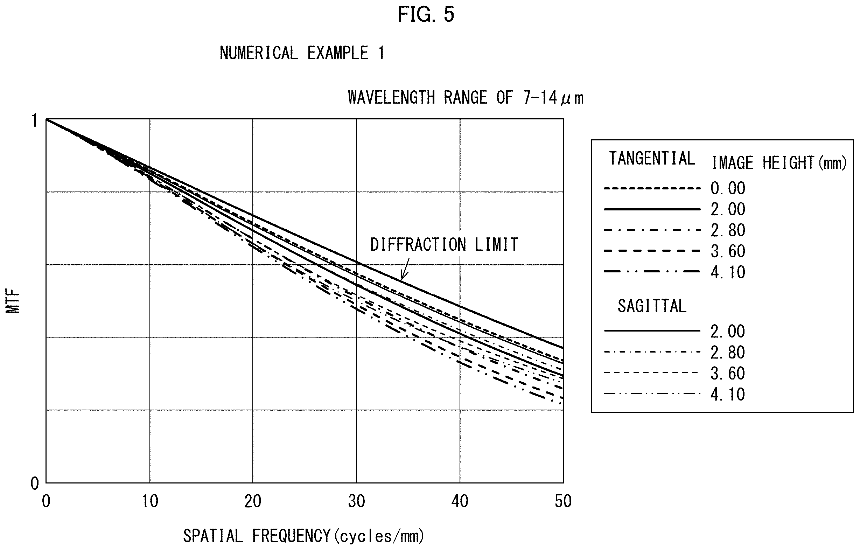

Fig. 5 is a graph illustrating a spatial frequency dependency of an MTF in a wavelength range of 7 μm to 14 μm. An image sensor having 320 × 256 pixels having a pixel pitch of 12 μm has a Nyquist frequency $f_N$ of 41.7 cycles/mm and a maximum image height of 2.46 mm. At the Nyquist frequency $f_N$ of 41.7 cycles/mm, an MTF at a center of an image is 0.46, and thus MTF > 0.37 (a simple average value of an MTF in a tangential direction and an MTF in a sagittal direction) is secured in a region of the image sensor.

In addition, an image sensor having 384 × 288 pixels having a pixel pitch of 17 μm has a Nyquist frequency $f_N$ of 29.4 cycles/mm and a maximum image height of 4.08 mm. At the Nyquist frequency $f_N$ = 29.4 cycles/mm, an MTF at the center of the image is 0.58, and thus MTF > 0.49 (a simple average value of an MTF in the tangential direction and an MTF in a sagittal direction) is secured in a region of the image sensor.

As described above, the infrared imaging lens 1 secures good resolution even when evaluated with use of MTFs over a wide wavelength range of 7 μm to 14 μm in regions of respective QVGA-class image sensors having pixel pitches ranging from approximately 12 μm to 17 μm.

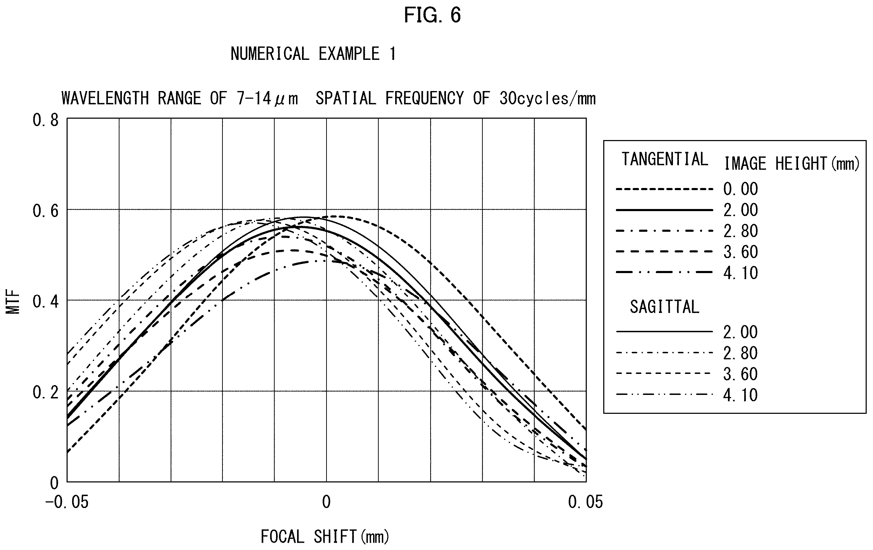

Needless to say, the infrared imaging lens 1 can achieve good properties within any wavelength range of, for example, 7 μm to 12 μm, 8 μm to 12 μm, or 8 μm to 10 μm, provided that the wavelength range is within 7 μm to 14 μm. Fig. 6 is a graph showing a change in an MTF with respect to a focal shift in the wavelength range of 7 μm to 14 μm.

As described above, the infrared imaging lens 1 in accordance with Numerical Example 1 can cover the wavelength range of 7 μm to 14 μm and has good resolution sufficiently suitable for a QVGA-class image sensor which has a pixel pitch of approximately 12 μm to 17 μm. Furthermore, the distortion over the entire image circle is not more than 0.37%, which is extremely small.

The infrared imaging lens 1 in accordance with Numerical Example 1 has an f-number of 1.0, which provides high brightness. Further, the infrared imaging lens 1 in accordance with Numerical Example 1 has an entire length of the optics (total track length TTL) of 38.5 mm and a maximum effective diameter of 28.0 mm, and thus is compact. Unlike conventional techniques, the present embodiment makes it possible to provide an infrared imaging lens that is a telephoto lens being compact and having excellent properties.

Aspects of the present invention can also be expressed as follows:

A first aspect of the present invention is an infrared imaging lens that is used in an infrared region including at least a wavelength in a range of 7 μm to 14 μm, the infrared imaging lens including: a first lens, a second lens, and a third lens that are disposed in this order in a direction from an object to an image plane, each of the first lens, the second lens, and the third lens being made of a chalcogenide glass having a refractive index of 2.5 to 4.0 measured at a wavelength of 10 μm, the infrared imaging lens having a total system focal length fL which is not less than two times larger than a diameter of an image circle of the infrared imaging lens, each of the first lens and the third lens being a meniscus lens having a positive power, and the second lens being a meniscus lens having a negative power.

In accordance with the above configuration, it is possible to provide an infrared imaging lens that is a telephoto lens having (i) excellent resolution suitable for an image sensor having a pixel pitch substantially equivalent to a wavelength and (ii) small distortion.

A second aspect of the present invention is an infrared imaging lens that is used in an infrared region including at least a wavelength in a range of 7 μm to 14 μm, the infrared imaging lens including: a first lens, a second lens, and a third lens that are disposed in this order in a direction from an object to an image plane, each of the first lens, the second lens, and the third lens being made of a chalcogenide glass having a refractive index of 2.5 to 4.0 measured at a wavelength of 10 μm, each of the first lens and the third lens being a meniscus lens having a positive power, the second lens being a meniscus lens having a negative power, and the infrared imaging lens having a half angle of view of not more than 14°.

In accordance with the above configuration, it is possible to provide an infrared imaging lens that is a telephoto lens having (i) excellent resolution suitable for an image sensor having a pixel pitch substantially equivalent to a wavelength and (ii) small distortion.

An infrared imaging lens in accordance with a third aspect of the present invention is configured such that, in the first or second aspect, each of the first lens, the second lens, and the third lens has a meniscus shape convex toward the object side. In accordance with the above configuration, it is possible to provide an infrared imaging lens that is a compact telephoto lens having excellent aberration properties.

An infrared imaging lens in accordance with a fourth aspect of the present invention is configured such that, in any one of the first to third aspects, an effective diameter of a surface of the first lens which surface is closer to the object is regarded as an aperture. In accordance with the above configuration, it is possible to reduce vignetting of peripheral light beams and increase peripheral light quantity.

An infrared imaging lens in accordance with a fifth aspect of the present invention is configured such that, in any one of the first to fourth aspects, at least one of the first lens and the second lens is an aspherical lens. In accordance with the above configuration, it is possible to realize an infrared imaging lens that has particularly excellent aberration properties.

An infrared imaging lens in accordance with a sixth aspect of the present invention is configured such that, in any one of the first to fifth aspects, either one of surfaces of the first lens is a diffractive surface. In accordance with the above configuration, it is possible to reduce axial chromatic aberration and lateral chromatic aberration.

An infrared imaging lens in accordance with a seventh aspect of the present invention is configured such that, in any one of the first to sixth aspects, a surface of the first lens which surface is closer to the image plane is a diffractive surface. In accordance with the above configuration, it is possible to provide an infrared imaging lens for which a diffractive surface can be easily formed and accordingly the axial chromatic aberration and the lateral chromatic aberration can be reduced.

An infrared imaging lens in accordance with an eighth aspect of the present invention is configured such that, in any one of the first to seventh aspects, a focal length f1 and a total system focal length fL of the first lens satisfy the following relational expression: $1.5 \leq f1/fL \leq 2.5$. In accordance with the above configuration, it is possible to obtain high resolution suitable for an image sensor having a pixel pitch substantially equivalent to a wavelength, while maintaining good aberration properties.

An infrared imaging lens in accordance with a ninth aspect of the present invention is configured such that, in any one of the first to eighth aspects, a total track length TTL and a total system focal length fL satisfy the following relational expression: $1.2 \leq TTL/fL \leq 2.0$, the total track length TTL being a distance along an optical axis measured from a surface of the first lens which surface is closer to the object to the image plane. In accordance with the above configuration, it is possible to obtain high resolution suitable for an image sensor having a pixel pitch substantially equivalent to a wavelength, while maintaining good aberration properties.

An infrared imaging lens in accordance with a tenth aspect of the present invention is configured such that, in any one of the first to ninth aspects, a back focal length BFL and a total system focal length fL satisfy the following relational expression: $0.2 \leq BFL/fL$. In accordance with the above configuration, it is possible to provide a telephoto lens which has excellent aberration properties and resolution, while securing the back focal length BFL.

An infrared imaging lens in accordance with an eleventh aspect of the present invention is configured such that, in any one of the first to tenth aspects, a relative illuminance on the image plane observed in the image circle is not less than 94%. In accordance with the above configuration, it is possible to provide an infrared imaging lens with which sufficient peripheral light quantity is secured.

An infrared imaging lens in accordance with a twelfth aspect of the present invention is configured such that, in any one of the first to eleventh aspects, a modulation transfer function in a wavelength range of 7 $\mu$m to 14 $\mu$m at a spatial frequency of 41.7 cycles/mm is not less than 0.3 at an image height of 2.5 mm. In accordance with the above configuration, it is possible to provide an infrared imaging lens that can provide good resolution in an entire region of an image sensor having a pixel pitch substantially equivalent to a wavelength.

An infrared imaging lens in accordance with a thirteenth aspect of the present invention is configured such that, in any one of the first to twelfth aspects, a total system focal length fL is three to six times larger than the diameter of the image circle. In accordance with the above configuration, it is possible to provide an infrared imaging lens that is a telephoto lens having excellent aberration properties and resolution.

An infrared imaging lens in accordance with a fourteenth aspect of the present invention is configured such that, in any one of the first to thirteenth aspects, an f-number is in a range of 0.9 to 1.1. In accordance with the above configuration, it is possible to provide an infrared imaging lens having a small f-number to provide high brightness, the infrared imaging lens being a telephoto lens having excellent aberration properties and resolution.

An infrared imaging lens in accordance with a fifteenth aspect of the present invention is configured such that, in any one of the first to thirteenth aspects, the refractive index, measured at a wavelength of 10 $\mu$m, of the chalcogenide

glass of which each of the first lens, the second lens, and the third lens is made is 3.0 to 4.0. In accordance with the above configuration, it is possible to provide an infrared imaging lens that is a compact telephoto lens having (i) excellent resolution suitable for an image sensor having a pixel pitch substantially equivalent to a wavelength and (ii) small distortion.

An infrared imaging lens in accordance with a sixteenth aspect of the present invention is configured such that, in any one of the first to fourteenth aspects, the chalcogenide glass has an infrared absorption edge wavelength of not less than 18 $\mu$m, the infrared absorption edge wavelength being an optical transmittance of 20% at a thickness of 2 mm. In accordance with the above configuration, it is possible to provide an infrared imaging lens exhibiting little light absorption over a wavelength range of at least 7 $\mu$m to 14 $\mu$m.

The present invention is not limited to the embodiments, but can be altered by a skilled person in the art within the scope of the claims. The present invention also encompasses, in its technical scope, any embodiment derived by combining technical means disclosed herein. Further, it is possible to form a new technical feature by combining the technical means disclosed in the respective embodiments.

Reference Signs List

1: infrared imaging lens
L1: first lens
L2: second lens
L3: third lens
P: parallel flat plate
S: image plane
AP: aperture

**Claims**

1. An infrared imaging lens that is used in an infrared region including at least a wavelength in a range of 7 $\mu$m to 14 $\mu$m, the infrared imaging lens comprising:

   a first lens, a second lens, and a third lens that are disposed in this order in a direction from an object to an image plane,
   each of the first lens, the second lens, and the third lens being made of a chalcogenide glass having a refractive index of 2.5 to 4.0 measured at a wavelength of 10 $\mu$m,
   the infrared imaging lens having a total system focal length fL which is not less than two times larger than a diameter of an image circle of the infrared imaging lens,
   each of the first lens and the third lens being a meniscus lens having a positive power, and the second lens being a meniscus lens having a negative power.

2. An infrared imaging lens that is used in an infrared region including at least a wavelength in a range of 7 $\mu$m to 14 $\mu$m, the infrared imaging lens comprising:

   a first lens, a second lens, and a third lens that are disposed in this order in a direction from an object to an image plane,
   each of the first lens, the second lens, and the third lens being made of a chalcogenide glass having a refractive index of 2.5 to 4.0 measured at a wavelength of 10 $\mu$m,
   each of the first lens and the third lens being a meniscus lens having a positive power, the second lens being a meniscus lens having a negative power, and
   the infrared imaging lens having a half angle of view of not more than 14°.

3. The infrared imaging lens according to claim 1 or 2, wherein:
   each of the first lens, the second lens, and the third lens has a meniscus shape convex toward the object side.

4. The infrared imaging lens according to claim 1 or 2, wherein:
   an effective diameter of a surface of the first lens which surface is closer to the object is regarded as an aperture.

5. The infrared imaging lens according to claim 1 or 2, wherein:

at least one of the first lens and the second lens is an aspherical lens.

6.  The infrared imaging lens according to claim 5, wherein:
    either one of surfaces of the first lens is a diffractive surface.

7.  The infrared imaging lens according to claim 6, wherein:
    a surface of the first lens which surface is closer to the image plane is a diffractive surface.

8.  The infrared imaging lens according to claim 1 or 2, wherein:
    a focal length f1 and a total system focal length fL of the first lens satisfy the following relational expression:

$$1.5 \leq f1/fL \leq 2.5.$$

9.  The infrared imaging lens according to claim 1 or 2, wherein:

    a total track length TTL and a total system focal length fL satisfy the following relational expression:

$$1.2 \leq TTL/fL \leq 2.0,$$

    the total track length TTL being a distance along an optical axis measured from a surface of the first lens which surface is closer to the object to the image plane.

10. The infrared imaging lens according to claim 1 or 2, wherein:
    a back focal length BFL and a total system focal length fL satisfy the following relational expression:

$$0.2 \leq BFL/fL.$$

11. The infrared imaging lens according to claim 1 or 2, wherein:
    a relative illuminance on the image plane observed in the image circle is not less than 94%.

12. The infrared imaging lens according to claim 1 or 2, wherein:
    a modulation transfer function in a wavelength range of 7 $\mu$m to 14 $\mu$m at a spatial frequency of 41.7 cycles/mm is not less than 0.3 at an image height of 2.5 mm.

13. The infrared imaging lens according to claim 1 or 2, wherein:
    a total system focal length fL is three to six times larger than the diameter of the image circle.

14. The infrared imaging lens according to claim 1 or 2, wherein:
    an f-number is in a range of 0.9 to 1.1.

15. The infrared imaging lens according to claim 1 or 2, wherein:
    the refractive index, measured at a wavelength of 10 $\mu$m, of the chalcogenide glass of which each of the first lens, the second lens, and the third lens is made is 3.0 to 4.0.

16. The infrared imaging lens according to claim 1 or 2, wherein:
    the chalcogenide glass has an infrared absorption edge wavelength of not less than 18 $\mu$m, the infrared absorption edge wavelength being an optical transmittance of 20% at a thickness of 2 mm.

FIG. 1

# FIG. 2

NUMERICAL EXAMPLE 1

EP 4 782 902 A1

WAVELENGTH (μm)
------- 7
---- 8.5
——— 10
—·— 12
——— 14

IMAGE HEIGHT RATIO

INCIDENT ANGLE (deg.)

INCIDENT ANGLE (deg.)

T: TANGENTIAL
S: SAGITTAL

S

T

SPHERICAL ABERRATION (mm)

ASTIGMATISM (mm)

DISTORTION (%)

# FIG. 3

NUMERICAL EXAMPLE 1

TANGENTIAL

SAGITTAL

COMATIC ABERRATION

FIG. 4

NUMERICAL EXAMPLE 1

WAVELENGTH OF 10 $\mu$ m

## FIG. 5

NUMERICAL EXAMPLE 1

WAVELENGTH RANGE OF 7-14 $\mu$m

| TANGENTIAL | IMAGE HEIGHT(mm) |
| --- | --- |
| ------------ | 0.00 |
| ———— | 2.00 |
| —·—·—·· | 2.80 |
| — — — — | 3.60 |
| —··—··— | 4.10 |

| SAGITTAL | |
| --- | --- |
| ———— | 2.00 |
| —··—··—·· | 2.80 |
| ------------ | 3.60 |
| —··—··—·· | 4.10 |

DIFFRACTION LIMIT

MTF

SPATIAL FREQUENCY(cycles/mm)

EP 4 782 902 A1

## FIG. 6

NUMERICAL EXAMPLE 1

WAVELENGTH RANGE OF 7-14μm  SPATIAL FREQUENCY OF 30cycles/mm

| TANGENTIAL | IMAGE HEIGHT (mm) |
| --- | --- |
| ------------ | 0.00 |
| —————— | 2.00 |
| —·—·—· | 2.80 |
| — — — — | 3.60 |
| —··—··— | 4.10 |

| SAGITTAL | |
| --- | --- |
| —————— | 2.00 |
| —··—··— | 2.80 |
| -------- | 3.60 |
| —·—·—·— | 4.10 |

FOCAL SHIFT (mm)

EP 4 782 902 A1

## INTERNATIONAL SEARCH REPORT

| International application No. |
|---|
| **PCT/JP2024/031989** |

**A.    CLASSIFICATION OF SUBJECT MATTER**

*G02B 13/14*(2006.01)i; *G02B 13/02*(2006.01)i; *G02B 13/18*(2006.01)i
FI:    G02B13/14; G02B13/02; G02B13/18

According to International Patent Classification (IPC) or to both national classification and IPC

**B.    FIELDS SEARCHED**

Minimum documentation searched (classification system followed by classification symbols)

G02B9/00-17/08; G02B21/02-21/04; G02B25/00-25/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2013-0044063 A (KOREA PHOTONICS TECHNOLOGY INSTITUTE) 02 May 2013 (2013-05-02) <br>        example 3 | 1-2, 4-14 |
| Y | | 1-16 |
| Y | JP 2012-37697 A (FUJIFILM CORPORATION) 23 February 2012 (2012-02-23) <br>        examples 2, 5 | 1-16 |
| Y | JP 2001-33689 A (FUJI PHOTO OPTICAL CO., LTD.) 09 February 2001 (2001-02-09) <br>        examples 1-3 | 3 |
| Y | WO 2023/008148 A1 (NIPPON ELECTRIC GLASS CO., LTD.) 02 February 2023 (2023-02-02) <br>        claims, paragraphs [0001], [0004]-[0008], [0010]-[0091], fig. 1-7 | 11-16 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 November 2024** | **26 November 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/031989**

| Patent document cited in search report | | | Publication date (day/month/year) | Patent family member(s) | | | Publication date (day/month/year) |
|---|---|---|---|---|---|---|---|
| KR | 10-2013-0044063 | A | 02 May 2013 | KR | 10-1293217 | B1 | |
| JP | 2012-37697 | A | 23 February 2012 | JP | 5512457 | B2 | |
| JP | 2001-33689 | A | 09 February 2001 | US | 6507432 | B1 | |
| | | | | examples 1-3 | | | |
| WO | 2023/008148 | A1 | 02 February 2023 | EP | 4379444 | A1 | |
| | | | | claims, paragraphs [0001], [0004]-[0008], [0010]-[0091], fig. 1-7 | | | |
| | | | | US | 2024/0288672 | A1 | |
| | | | | CN | 117242386 | A | |
| | | | | JP | 2023-19071 | A | |

Form PCT/ISA/210 (patent family annex) (July 2022)

**REFERENCES CITED IN THE DESCRIPTION**

**Patent documents cited in the description**

- WO 2023008148 A

- WO 2020105719 A1